(19) **Europäisches Patentamt**
**European Patent Office**
**Office européen des brevets**

(11) **EP 1 879 122 A1**

(12) **EUROPEAN PATENT APPLICATION**

(43) Date of publication:
**16.01.2008 Bulletin 2008/03**

(51) Int Cl.:
**G06F 21/00** *(2006.01)*

(21) Application number: **06405293.9**

(22) Date of filing: **10.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ABB Research Ltd**
**8050 Zürich (CH)**

(72) Inventor: **Naedele, Martin**
**8050 Zürich (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method and devices for verifying authenticity of a called code module**

(57) For verifying authenticity of a called code module, determined (S1) from information included in the calling code module (1) is a public key of a certification authority. A signer certificate is retrieved (S2) from the called code module. The signer certificate is based on a public signing key associated with the provider of the called code module and encrypted using a private key of the certification authority. Using the public key of the certification authority, the signer certificate is verified (S3). From the called code module, a code signature is retrieved (S5). The code signature is based on code of the called code module and encrypted using a private key associated with the provider of the called code module. Using the public signing key associated with the provider of the called code module, the code signature is verified (S6). Because no information specific to the module provider is compiled into the calling code module, its authenticity can be verified automatically, without having to update a calling code module when different legitimate signing keys are used.

**Fig. 3**

```
S1 ─ DETERMINE PUBLIC KEY pub_CA OF CA
          │
S2 ─ RETRIEVE SIGNER CERTIFICATE cert_S
          │
S3 ─ VERIFY SIGNER CERTIFICATE cert_S
          │
S4 ─ RETRIEVE PUBLIC KEY pub_S OF SIGNER
          │
S5 ─ RETRIEVE CODE SIGNATURE sign_C
          │
S6 ─ VERIFY CODE SIGNATURE sign_C

S7 ─ DENY AUTHENTICITY

CONFIRM AUTHENTICITY ─ S8
```

EP 1 879 122 A1

**Description**

FIELD OF THE INVENTION

The present invention relates to a method of verifying the authenticity of a called code module, used by a calling code module. Specifically, the invention relates to a method, a computer program product, and a device for verifying the authenticity of a called code module having included therein a cryptographic signature that is based on code of the called code module and encrypted using a private key of a cryptographic key pair associated with the provider of the called code module.

BACKGROUND OF THE INVENTION

By verifying the authenticity of a called code module that is used by a calling code module, it can be ensured that the relation of called code module, i.e. the callee code module or callee component, to the calling code module, i.e. the caller code module or caller component, is not changed in an unauthorized way. The term "code module" relates to any software modules and computer program (code) modules. Described in Keith Brown, "Security Briefs: Strong Names and Security in the .NET Framework", Dec 2003, available on http://msdn.microsoft.com/library/default.asp?url=/library/enus/dnnetsec/html/strongNames.asp, is a strong name signing mechanism used in Microsoft's ".NET"-framework for authenticating callee components. In the code-signing scheme described by Keith Brown, the name of a component consists of a tuple (textual name, version, culture, public key), and the callee artifact (or its hash) is signed (encrypted) with the private key corresponding to the public key in the name. In the caller code, the reference to the callee is made by means of this name tuple. This code-signing scheme requires that the caller application has to be recompiled whenever the signing key pair changes. This has two major disadvantages:

  a) It is impossible that different developers with different individual key pairs work on the callee components for an already compiled caller. This is against the general security principle that a signing key should not be shared.

  b) If a signing key gets lost or compromised and a new signing key pair has to be generated, all callers, also those already deployed, must be updated. Particularly, in scenarios with widely distributed software components, updating deployed caller components requires a tremendous organizational overhead and usage of networking as well as processing resources.

DESCRIPTION OF THE INVENTION

It is therefore an objective of the present invention to provide a method and devices for verifying the authenticity of a called code module without the disadvantages of the prior art. Particularly, it is an object of the present invention to provide a method, a computer program product, and a device for verifying the authenticity of a called code module without having to update calling code modules when different developers use different individual key pairs to work on the called code modules for an already compiled calling code module, or when a signing key gets lost or compromised and a new signing key is to be used as a replacement.
This objective is achieved by a method of verifying the authenticity of a called code module according to claim 1, a computer program product according to claim 5, and a computerized device according to claim 6. Further preferred embodiments are evident from the dependent claims.
According to the present invention, the above-mentioned objects are particularly achieved in that, for verifying the authenticity of a called code module used by a calling code module, in the calling code module, included is information for determining a public key of a cryptographic key pair associated with a certification authority. In the called code module, included are a cryptographic certificate, the cryptographic certificate being based on at least a public key of a cryptographic key pair associated with the provider of the called code module and encrypted using a private key of the key pair associated with the certification authority, and a cryptographic signature, the cryptographic signature being based on code of the called code module and encrypted using a private key of the key pair associated with the provider of the called code module. Using the public key of the key pair associated with the certification authority, the calling code module verifies the cryptographic certificate. Using the public key of the key pair associated with the provider of the called code module and retrieved from the cryptographic certificate, the calling code module verifies the cryptographic signature. Thus, unlike the prior art, which includes in the calling code module a public key associated with the provider of the called code module, according to the present invention, included in the called code module is a certificate of this public key signed by the private key of a certification authority. Furthermore, unlike in the prior art, no information specific to the provider of the called code module is compiled into the calling module. Consequently, it is possible to have different signers sign the called code module, as long as they are approved by the certification authority. Using the public key of the key pair associated with the certification authority for verifying the cryptographic certificate, embedded in the called code module, and using the public key of the key pair associated with the provider of the called code module and retrieved from the cryptographic certificate for verifying the cryptographic signature, embedded in the called code module, make it possible to verify automatically the authenticity of the called code module, thereby, ensuring that the caller to callee component relation is not changed in an unauthorized way, without having to update calling code modules when different signing keys are used legitimately for the called code module.

In an embodiment, the public key of the key pair associated with the certification authority is included in the calling code module.

In another embodiment, the cryptographic certificate is further based on an identifier of a module provider, and an identifier of the certification authority.

Preferably, the calling code module refers to the called code module by identification information including at least an identifier of the called code module and an identifier of the certification authority.

In addition to a method of verifying the authenticity of a called code module, and a device used for executing the method, the present invention also relates to a computer program product including computer program code means for controlling one or more processors of a computer; particularly, a computer program product including a computer readable medium containing therein the computer program code means.

BRIEF DESCRIPTION OF THE DRAWINGS

The present invention will be explained in more detail, by way of example, with reference to the drawings in which:

Fig. 1 shows a block diagram illustrating schematically a computerized device 5 for verifying the authenticity of a called code module,
Fig. 2 shows examples of a calling code module and called code modules, the called modules being signed with different signing keys.
Fig. 3 shows an exemplary sequence of steps for verifying the authenticity of a called code module.

DETAILED DESCRIPTION OF PREFERRED EMBODIMENTS

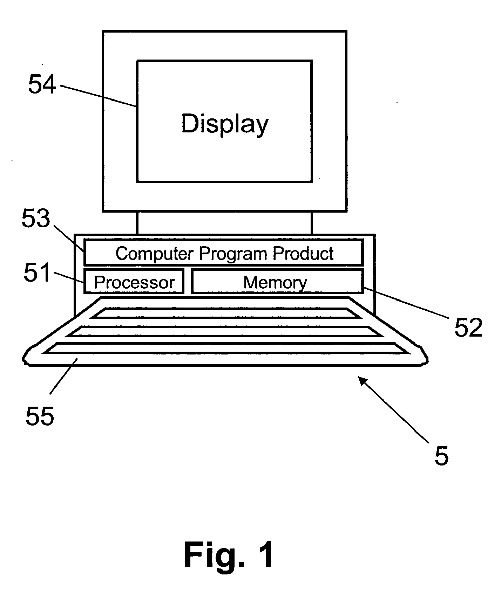

Fig. 1 shows a block diagram illustrating schematically a computerized device 5 for verifying the authenticity of a called code module used by a calling code module. Device 5 comprises one or more processors 51, data and program memory 52, as well as a computer program product 53 including program code means for controlling the processor(s) 51, such that the computerized device verifies the authenticity of a called code module as described below. Preferably, the computer program product 53 comprises a computer readable medium, fixed or removable from device 5, containing therein the computer program code means. Optionally, device 5 comprises a display 54 and/or data entry means 55.

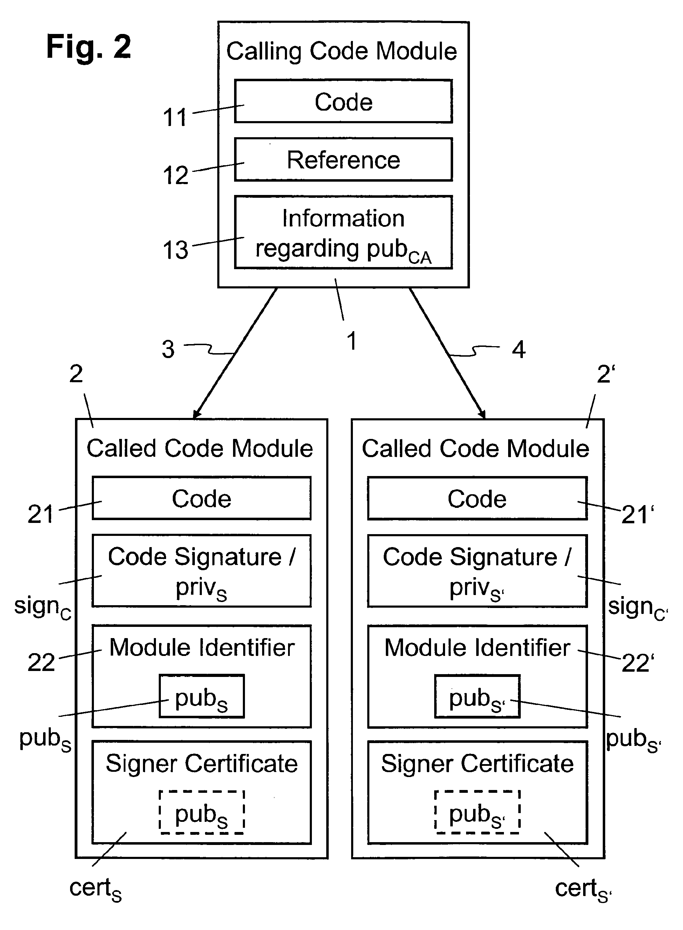

In Fig. 2, reference numeral 2 refers to a called code module signed, e.g. by a first signer, using a first cryptographic key pair, including a first private key (privs) and a first public key (pubs); while reference numeral 2' refers to the called code module signed, e.g. by a second signer, using a second cryptographic key pair, including a second private key ($priv_{S'}$) and a second public key ($pub_{S'}$).

As illustrated in Fig. 2, the called code modules 2, 2', i.e. the callees, each comprise (executable) code 21, 21' and other (meta) information, a cryptographic code signature $sign_C$, $sign_{C'}$, module identification information 22, 22', and a cryptographic signer certificate $cert_S$, $cert_{S'}$.

The code signature $sign_C$ (or $sign_{C'}$) is based on a hash of the code 21 (or 21') and possibly of other data of the callee 2 or 2', and signed using a private signing key ($priv_S$ or $priv_{S'}$) of a cryptographic key pair associated with the provider of the called code module 2, 2', i.e. a key pair associated with the provider and/or individual signer of the called code module 2, 2':

$$sign_C = \{Hash(code,\dots)\}priv_S.$$

The module identification information 22, 22' comprises an identifier (name) of the callee 2, 2', consisting of various attributes such as textual name, version and culture, and the public key pubs (or $pub_{S'}$) of the key pair associated with the provider of the called code module 2, 2' (or an identifier, e.g. fingerprint, hash, of this public key):

$$\text{Module Identifier} = ((\text{name, version, culture, \ldots}), \text{pub}_S).$$

The signer certificate $\text{cert}_S$ (or $\text{cert}_{S'}$) is based on at least the public key $\text{pub}_S$ (or $\text{pub}_{S'}$) of the cryptographic key pair associated with the provider of the called code module 2, 2' and encrypted using a private key ($\text{priv}_{CA}$) of a cryptographic key pair associated with an certification authority (CA). In an embodiment, the signer certificate $\text{cert}_S$ (or $\text{cert}_{S'}$) is additionally based on an identifier $\text{ID}_S$ (or $\text{ID}_{S'}$) of the provider and/or individual signer of the called code module 2, 2', and/or an identifier $\text{ID}_{CA}$ of the certification authority:

$$\text{cert}_S = \{\text{pub}_S, \text{ID}_S, \text{ID}_{CA}, \ldots\}\text{priv}_{CA}.$$

As illustrated in Fig. 2, the calling code module 1, i.e. the caller, comprises (executable) code 11 and other (meta) information, a reference 12 to the called code module 2, 2', and information 13 regarding the public key ($\text{pub}_{CA}$) of the key pair associated with the certification authority.

The reference 12 to the callee comprises module identification information related to the called code module 2, 2', e.g. an identifier (name) of the callee 2, 2', consisting of various attributes such as textual name, version and culture. Moreover, the reference 12 includes an identifier $\text{ID}_{CA}$ of the certification authority:

$$\text{Reference} = ((\text{name, version, \ldots.}), \text{ID}_{CA}).$$

Depending on the embodiment, the information 13 regarding the public key ($\text{pub}_{CA}$) of the key pair associated with the certification authority includes a copy of this public key ($\text{pub}_{CA}$), a certificate ($\text{cert}_{CA}$) based on this public key ($\text{pub}_{CA}$), or other information suitable to determine this public key ($\text{pub}_{CA}$). For example the latter certificate ($\text{cert}_{CA}$) is self-signed using the corresponding private key ($\text{priv}_{CA}$) of the key pair associated with the certification authority or it is preferably signed by a higher certification authority using its private key $\text{priv}_{CA'}$. In an embodiment, the certificate ($\text{cert}_{CA}$) is additionally based on an identifier ($\text{ID}_{CA'}$) of the certification authority:

$$\text{cert}_{CA} = \{\text{pub}_{CA}, \text{ID}_{CA'}, \ldots\}\text{priv}_{CA'}$$

In an embodiment, the calling code module 1 has access to a trusted copy of the certificate ($\text{cert}_{CA}$), signed by the certification authority or by the higher certification authority, for example.

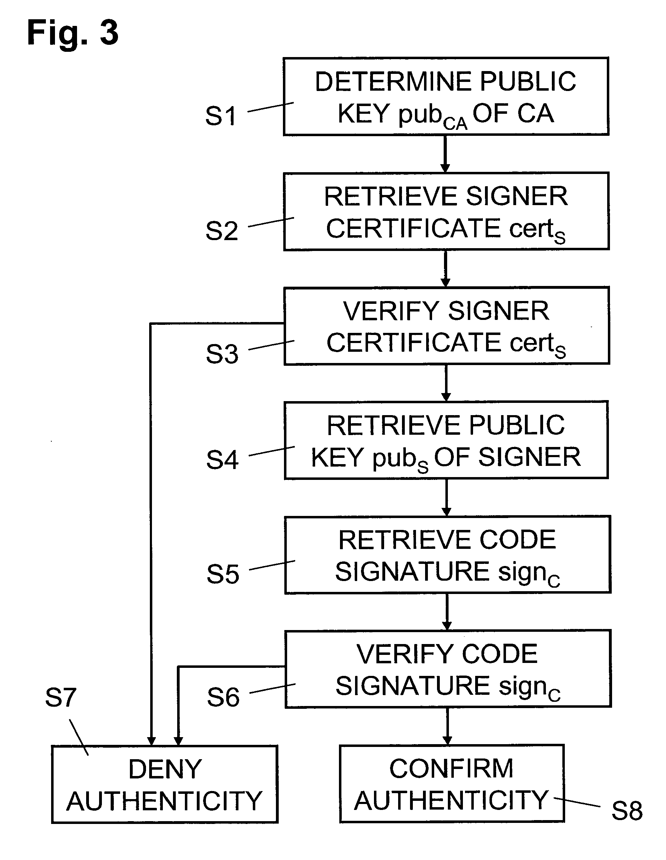

In the following paragraphs, described with reference to Fig. 3 is a possible sequence of steps executed by computerized device 5, as controlled by the calling code module 1, for verifying authenticity of the called code module 2, 2' used by the calling code module 1, as indicated by arrows 3, 4.

In step S1, device 5 determines the public key ($\text{pub}_{CA}$) of the certification authority, i.e. device 5 (or the calling code module 1, respectively) determines the public key ($\text{pub}_{CA}$) of the key pair associated with the certification authority based on information 13.

In step S2, device 5 retrieves the signer certificate $\text{cert}_S$ (or $\text{cert}_{S'}$) from the called code module 2 (or 2').

In step S3, using the public key ($\text{pub}_{CA}$) of the certification authority, device 5 verifies the authenticity of the signer certificate $\text{cert}_S$ (or $\text{cert}_{S'}$) retrieved in step S2. If the authenticity of the signer certificate $\text{cert}_S$ (or $\text{cert}_{S'}$) is confirmed, device 5 proceeds in step S4; otherwise, device 5 proceeds in step S7.

In step S4, device 5 retrieves the public key ($\text{pub}_S$ or $\text{pub}_{S'}$) of the signer, i.e. device 5 retrieves, from the signer certificate $\text{cert}_S$ (or $\text{cert}_{S'}$), the public key $\text{pub}_S$ (or $\text{pub}_{S'}$) of the cryptographic key pair associated with the provider of the called code module 2, 2'.

In step S5, device 5 retrieves the code signature $\text{sign}_C$ (or $\text{sign}_{C'}$) from the called code module 2 (or 2').

In step S6, using the public key ($\text{pub}_S$ or $\text{pub}_{S'}$) determined in step S4, device 5 verifies the authenticity of the code signature $\text{sign}_C$ (or $\text{sign}_{C'}$) retrieved in step S5. If the authenticity of the code signature $\text{sign}_C$ (or $\text{sign}_{C'}$) is confirmed, device 5 proceeds in step S8; otherwise, device 5 proceeds in step S7.

In step S7, device 5 denies the authenticity of the called code module 2 (or 2'), for example by issuing an error message on display 54 and rejects the called code module 2 (or 2').

In step S8, device 5 confirms the authenticity of the called code module 2 (or 2') and accepts the called code module 2 (or 2') for further processing.

## Claims

1.   A method of verifying authenticity of a called code module (2, 2') used by a calling code module (1), the method comprising:

including in the calling code module (1) information (13) for determining a public key of a cryptographic key pair associated with a certification authority;
including in the called code module (2, 2') a cryptographic certificate (cert$_S$), the cryptographic certificate (cert$_S$) being based on at least a public key (pub$_S$) of a cryptographic key pair associated with a provider of the called code module (2, 2') and encrypted using a private key of the key pair associated with the certification authority;
including in the called code module (2, 2') a cryptographic signature (sign$_C$), the cryptographic signature (sign$_C$) being based on code of the called code module (2, 2') and encrypted using a private key of the key pair associated with the provider of the called code module (2, 2');
verifying (S3) by the calling code module (1) the cryptographic certificate (cert$_S$) using the public key of the key pair associated with the certification authority; and
verifying (S6) by the calling code module (1) the cryptographic signature (sign$_C$) using the public key (pub$_S$) of the key pair associated with the provider of the called code module (2, 2') and retrieved from the cryptographic certificate (cert$_S$).

2.   The method according to claim 1, wherein including in the calling code module (1) information (13) for determining the public key comprises including in the calling code module (1) the public key of the key pair associated with the certification authority.

3.   The method according to claim 1, wherein the cryptographic certificate (cert$_S$) is further based on an identifier of a module provider and an identifier of the certification authority.

4.   The method according to claim 1, wherein the calling code module (1) refers to the called code module (2, 2') by identification information including at least an identifier of the called code module (2, 2') and an identifier of the certification authority.

5.   A computer program product (53) comprising computer program code means for controlling a processor (51) of a computer, such that the computer, for verifying authenticity of a called code module (2, 2') used by a calling code module (1), determines (S1), from information (13) included in the calling code module (1), a public key of a cryptographic key pair associated with a certification authority, retrieves (S2), from the called code module (2, 2'), a cryptographic certificate (cert$_S$), the cryptographic certificate (cert$_S$) being based on at least a public key (pubs) of a key pair associated with a provider of the called code module (2, 2') and encrypted using a private key of the key pair associated with the certification authority,
verifies (S3) the cryptographic certificate (cert$_S$) retrieved, using the public key determined,
retrieves (S4), from the cryptographic certificate (cert$_S$), the public key (pubs) of the key pair associated with the provider of the called code module (2, 2'),
retrieves (S5), from the called code module (2, 2'), a cryptographic signature (sign$_C$), the cryptographic signature (sign$_C$) being based on code (21, 21') of the called code module (2, 2') and encrypted using a private key of the key pair associated with the provider of the called code module (2, 2'), and
verifies (S6) the cryptographic signature (sign$_C$), using the public key (pub$_S$) of the key pair associated with the provider of the called code module (2, 2').

6.   A computerized device (5) for verifying authenticity of a called code module (2, 2') used by a calling code module (1), the device (5) comprising:

means for determining, from information (13) included in the calling code module (1), a public key of a cryptographic key pair associated with a certification authority;
means for retrieving, from the called code module (2, 2'), a cryptographic certificate (cert$_S$), the cryptographic certificate (cert$_S$) being based on at least a public key (pub$_S$) of a key pair associated with a provider of the called code module (2, 2') and encrypted using a private key of the key pair associated with the certification authority;

means for verifying the cryptographic certificate ($cert_S$) retrieved, using the public key determined;

means for retrieving, from the cryptographic certificate ($cert_S$), the public key ($pub_S$) of the key pair associated with the provider of the called code module (2, 2');

means for retrieving, from the called code module (2, 2'), a cryptographic signature ($sign_C$), the cryptographic signature ($sign_C$) being based on code (21, 21') of the called code module (2, 2') and encrypted using a private key of the key pair associated with the provider of the called code module (2, 2'); and

means for verifying the cryptographic signature ($sign_C$), using the public key ($pub_S$) of the key pair associated with the provider of the called code module (2, 2').

54 — Display

53 — Computer Program Product

51 — Processor   Memory — 52

55

5

**Fig. 1**

**Fig. 2**

Calling Code Module

11 — Code

12 — Reference

13 — Information regarding $pub_{CA}$

3 — 1 — 4

2

Called Code Module

21 — Code

$sign_C$ — Code Signature / $priv_S$

22 — Module Identifier

$pub_S$

$pub_S$ — Signer Certificate

$pub_S$

$cert_S$

2'

Called Code Module

Code — 21'

Code Signature / $priv_{S'}$ — $sign_{C'}$

Module Identifier — 22'

$pub_{S'}$

$pub_{S'}$ — Signer Certificate

$pub_{S'}$

$cert_{S'}$

# Fig. 3

S1 — DETERMINE PUBLIC KEY $pub_{CA}$ OF CA

S2 — RETRIEVE SIGNER CERTIFICATE $cert_S$

S3 — VERIFY SIGNER CERTIFICATE $cert_S$

S4 — RETRIEVE PUBLIC KEY $pub_S$ OF SIGNER

S5 — RETRIEVE CODE SIGNATURE $sign_C$

S6 — VERIFY CODE SIGNATURE $sign_C$

S7 — DENY AUTHENTICITY

CONFIRM AUTHENTICITY — S8

**European Patent Office**

**EUROPEAN SEARCH REPORT**

Application Number

EP 06 40 5293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VERISIGN: "VeriSign Code Signing for Microsoft Authenticode Technology"[Online] 25 October 2005 (2005-10-25), pages 1-10, XP002409770 Retrieved from the Internet: URL:http://web.archive.org/web/20051025145 749/http://www.verisign.com/static/030999. pdf> [retrieved on 2006-11-29] * page 7 - page 8 * | 1-6 | INV. G06F21/00 |
| X | EP 0 686 906 A2 (SUN MICROSYSTEMS INC [US]) 13 December 1995 (1995-12-13) * abstract * | 1-6 | |
| X | US 5 311 591 A (FISCHER ADDISON M [US]) 10 May 1994 (1994-05-10) * column 6, line 23 - line 56 * * column 16, line 9 - line 62 * * figures 2,10 * | 1-6 | |
| X | US 2006/036851 A1 (DETREVILLE JOHN [US] DETREVILLE JOHN D [US]) 16 February 2006 (2006-02-16) * paragraph [0125] - paragraph [0126] * | 1-6 | TECHNICAL FIELDS SEARCHED (IPC) G06F |
| X | MARK RUSSINOVICH: "Process Explorer"[Online] 15 June 2005 (2005-06-15), pages 1-4, XP002409774 Retrieved from the Internet: URL:http://web.archive.org/web/20050803030 946/www.sysinternals.com/Utilities/Process Explorer.html> [retrieved on 2006-11-29] * page 2, paragraph 1 - paragraph 2 * | 1,5,6 | |
| X | US 5 970 252 A (BUXTON JEFFREY J [US] ET AL) 19 October 1999 (1999-10-19) * column 9, line 9 - line 23 * | 1,5,6 | |

The present search report has been drawn up for all claims

| Place of search | Date of completion of the search | Examiner |
|---|---|---|
| The Hague | 29 November 2006 | Alecu, Mihail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 40 5293

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2006

| Patent document cited in search report | | Publication date | Patent family member(s) | | Publication date |
|---|---|---|---|---|---|
| EP 0686906 | A2 | 13-12-1995 | DE<br>DE<br>JP<br>US | 69534212 D1<br>69534212 T2<br>8166879 A<br>5724425 A | 23-06-2005<br>12-01-2006<br>25-06-1996<br>03-03-1998 |
| US 5311591 | A | 10-05-1994 | US | 5412717 A | 02-05-1995 |
| US 2006036851 | A1 | 16-02-2006 | NONE | | |
| US 5970252 | A | 19-10-1999 | NONE | | |

For more details about this annex : see Official Journal of the European Patent Office, No. 12/82